Europäisches Patentamt

European Patent Office

Office européen des brevets

(11) Publication number: **0 045 190**
A2

# EUROPEAN PATENT APPLICATION

(21) Application number: **81303398.2**

(22) Date of filing: **24.07.81**

(51) Int. Cl.³: **F 16 H 37/04,** B 62 M 11/02, F 16 H 1/16, F 16 H 1/14

(30) Priority: **24.07.80 GB 8024348**

(43) Date of publication of application: **03.02.82**
**Bulletin 82/5**

(84) Designated Contracting States: **BE DE FR IT NL**

(71) Applicant: **WHITEHEAD, Ronald, 7 Lawn Fold Hadfield, Via Hyde Cheshire (GB)**

(72) Inventor: **WHITEHEAD, Ronald, 7 Lawn Fold Hadfield, Via Hyde Cheshire (GB)**

(74) Representative: **Funge, Harry, M'CAW & CO. 41-51 Royal Exchange Cross Street, Manchester M2 7BD (GB)**

(54) **Drive transmission arrangements.**

(57) A drive transmission for use on cycles or lifting gear comprises a manually driven input member (11), a drive element (12, 35) coupled to the wheel (59) or like driven member and a step-up gearing arrangement (14, 15) remote from the drive element (12, 35). The transmission also includes a change gear mechanism coupled to the drive element (12, 35), the change gear mechanism incorporating mutually engaging multiple sprocket devices (42) (46, 47, 48) using rollers (43, 44, 45) on one sprocket (42) to engage the other respective sprocket (46, 47, 48), a roller (66) carrying bevel wheel (50) engaging a split pinion (51) and a recirculating ball (77) worm (53) and wheel (54) drive.

ACTORUM AG

(EP13059M)
(22.7.81)                    - 1 -

DRIVE TRANSMISSION ARRANGEMENTS

The invention concerns drive transmission arrangements, and
has particular, though not exclusive, reference to such
arrangements as applied in circumstances where the power
supply and torque available are limited , ie manually
operable devices, and in which large mechanical advantage
is required.  Such circumstances prevail, for example in
the context of cycles, and in lifting devices.

According to the present invention there is proposed a
drive transmission arrangement comprising a manually
actuable input member, a drive element coupled to the member
to be driven, and a step-up gearing arrangement remote from
and independent of the said drive element.

According to a preferred feature the said gearing
arrangement is a multiple stage arrangement.

According to a further preferred feature a spindle of the
input member is arranged coaxially with and extends through

(EP13059M)                                - 2 -
(22.7.81)

a spindle of the gearing arrangement for rotational support
thereby.

The invention will now be described further by way of
example only, with reference to the accompanying drawings
illustrating several embodiments thereof, and in which:-

Fig. 1    is a diagrammatic plan view of a preferred
          form of the invention;

Fig. 2    is a sectional view corresponding to Fig. 1
          and illustrates a practical form of the drive
          transmission shown therein;

Fig. 3    is a diagrammatic plan view of a second
          embodiment of the invention;

Fig. 4    is a diagrammatic side elevation of the drive
          transmission shown in Fig. 3;

Fig. 5    is a front elevation of the rear freewheel and
          gearing mechanism;

Fig. 6    is a section on A-A of Fig. 5;

Fig. 7    is a section on B-B of Fig. 5;

Fig. 8    is a sectional elevation of the roller bevel
          wheel to an enlarged scale, and

Fig. 9    is an elevation of the worm and wheel drive
          arrangement to an enlarged scale;

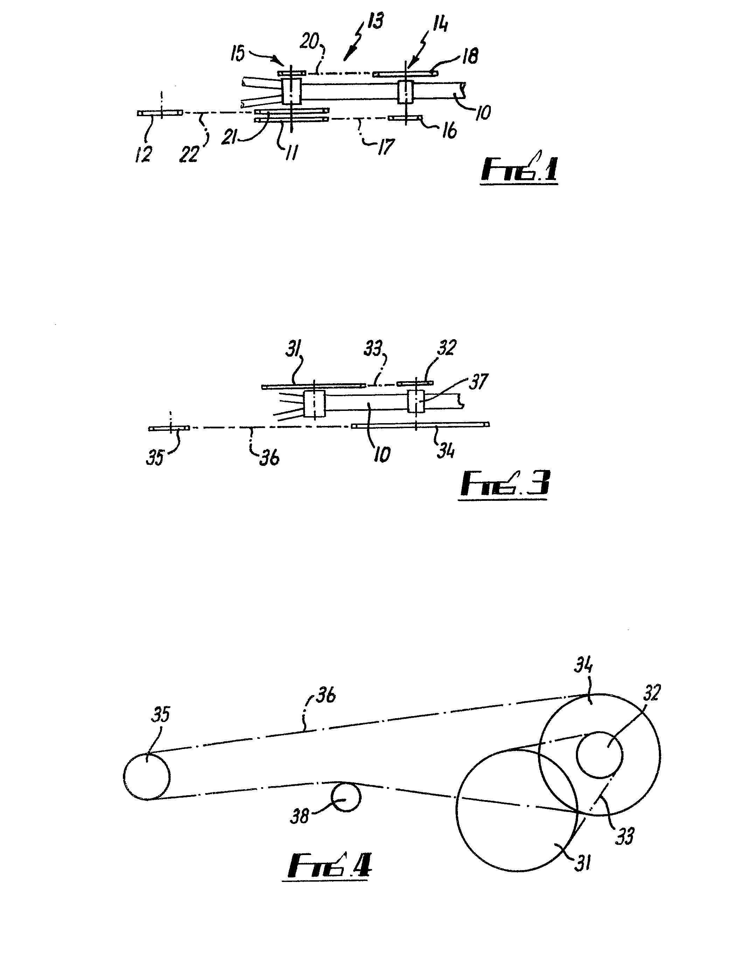

Referring now to the drawings, and particularly to Fig. 1
thereof, in its preferred form the drive transmission of
the invention comprises an input chain wheel 11 rotatably
mounted in the bottom bracket of a bicycle frame 10, a
drive sprocket 12 arranged coaxially with the rear wheel
of the bicycle and coupled thereto through a free wheel
and gearing mechanism described hereinafter, and a gearing
arrangement 13 intermediate and drivingly connected with
the input chain wheel 11 and the drive sprocket 12.

The gearing arrangement 13 consists of two pairs of chain sprockets 14, 15 each secured to a respective spindle 25, 29 rotatably mounted in suitable bearings provided on the frame, the spindles 25, 29 being arranged in spaced apart, parallel disposition.

The first pair of chain sprockets 14 of the gearing arrangement 13 includes an input sprocket 16 positioned in alignment with the input chain wheel 11 and drivingly connected therewith by suitable chain means 17 and an output sprocket 18 in alignment with and drivingly connected to the input sprocket 19 of the second pair 15 via chain means 20. The output sprocket 21 of the second pair of chain sprockets 15 is aligned with the drive sprocket 12 and is drivingly connected to such drive sprocket through a further chain means 22.

The second pair of chain sprockets 15 is arranged coaxially with the input chain wheel 11 conveniently in the manner hereafter to be described

It is proposed that the input sprockets 16, 19 of the respective pairs of chain sprockets shall have eighteen teeth, whilst the output sprocket 18, 21 shall, in each case, have fifty six teeth. It is furthermore proposed that the input chain wheel 11 shall have fifty six teeth and that the drive sprocket 12 shall have eighteen teeth.

As will readily be appreciated, the gear ratio between the successive chain connected sprockets will be determined by the relative number of teeth on such sprockets, and accordingly a step-up ratio in excess of thirty will result, thus to give an advance of approximately sixty metres for each pedal rotation for a cycle wheel of sixty six centimetre diameter.

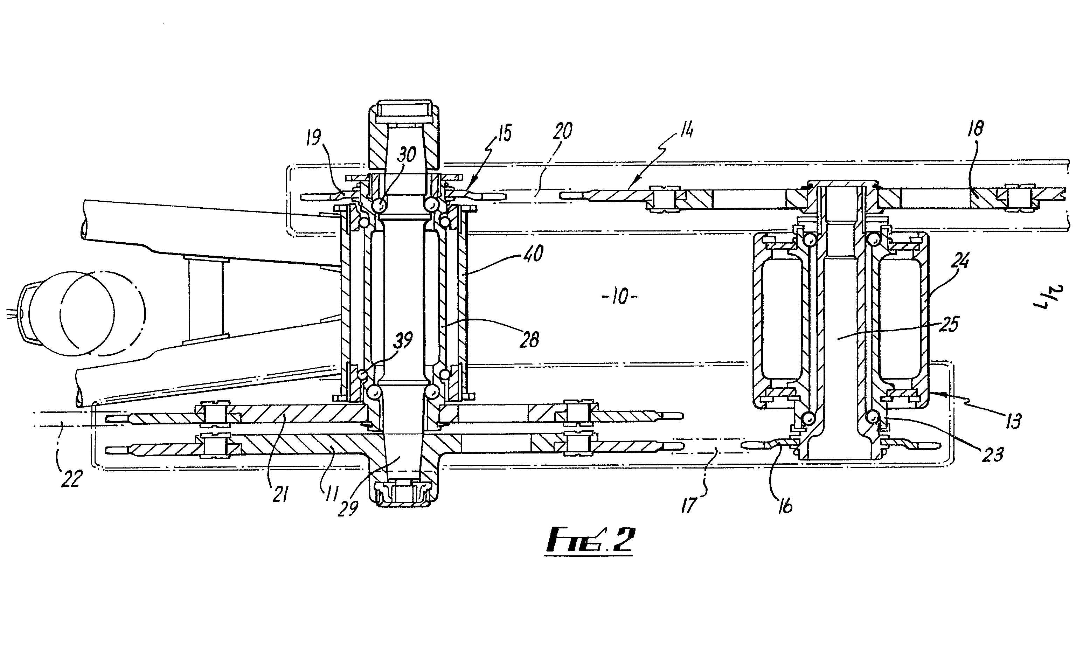

A practical form of the invention is illustrated in Fig. 2 and it will be seen that the spindle 25 of the first pair

(EP13059M)
(23.7.81)

- 4 -

of chain sprockets 14 is eccentrically mounted in support plates 23, themselves rotationally movable in a bearing housing 24 secured to the frame 10, to provide for adjustment of the tension in chain means 17, 20.

The spindle 28 of the second pair of chain sprockets 15 is of sleeve-like form and receives the spindle 29 of the input chain sprocket 11 coaxially therein, suitable bearing means 30 being provided between spindles 28 and 29, and bearing means 39 between spindle 28 and housing 40 which is secured to frame 10.

A jockey pulley, not shown, may be provided in respect of the further chain means 22.

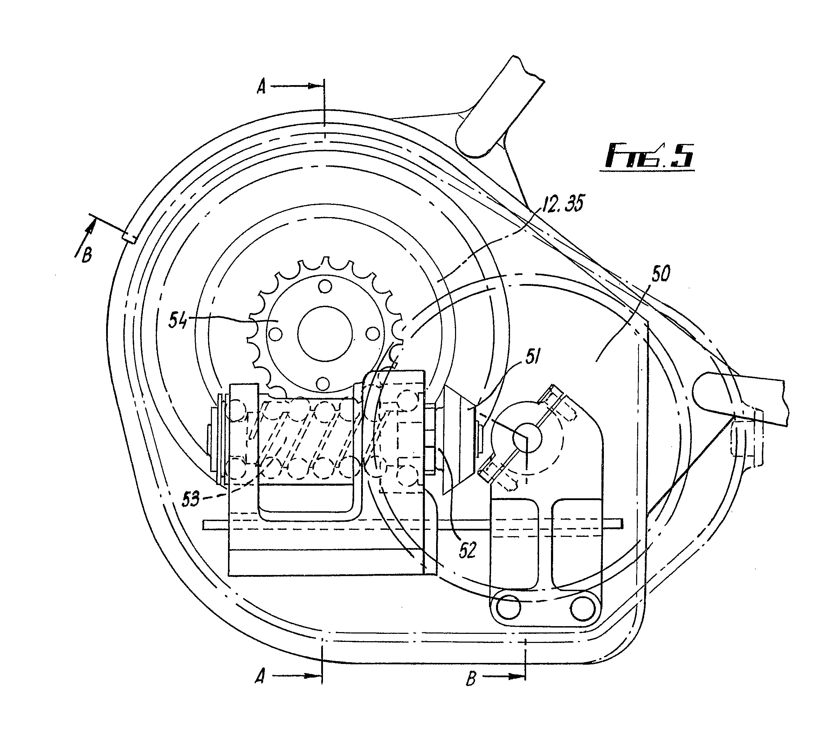

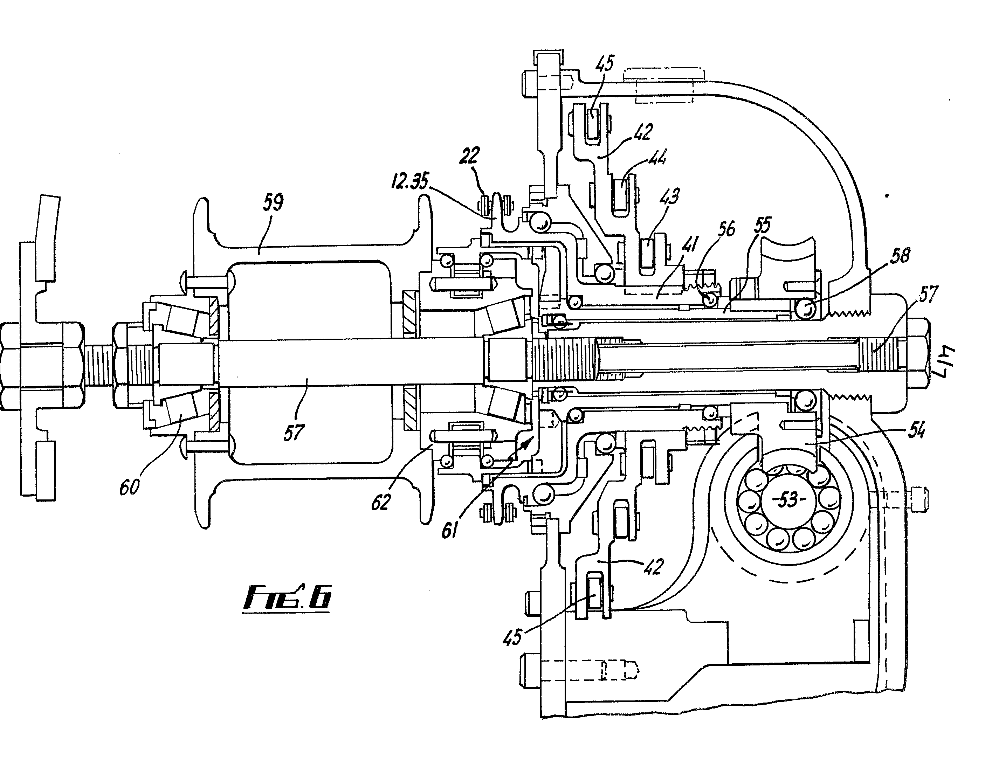

In an alternative arrangement, see now Figs. 3 and 4, the second pair of sprocket wheels is omitted, and accordingly the drive transmission is from input chain wheel 31 to the input sprocket 32 via a first chain means 33 and from output sprocket 34 to the drive sprocket 35 via a second chain means 36, sprockets 32, 34 being secured to a common spindle 37 and a jockey pulley 38 being provided in respect of chain means 36. With fifty six teeth on each of input chain wheel 31 and output sprocket 34 and eighteen teeth on input sprocket 32 and drive sprocket 35, a step-up ratio of approximately nine results.

It is to be understood that, although reference has been made to sprockets having fifty-six teeth drivingly connected by chain means to sprockets having eighteen teeth, other combinations of sprocket teeth may be preferred in some instances so as, for example, to produce a lesser step-up ratio. For example, the sprockets having fifty-six teeth may conveniently be replaced by sprockets having forty-two teeth to give a step-up ratio of over twelve for the Fig. 1 embodiment and a step-up ratio of over five for the Fig 3 embodiment.

(EP13059M)                    - 5 -
(23.7.81)

Whilst the drive transmission arrangements described above comprise chain sprockets and chain means, a direct connection through intermeshing gears, or other conventional drive connections such as belts and pulleys, may have application in some contexts, and the invention is to be construed accordingly.

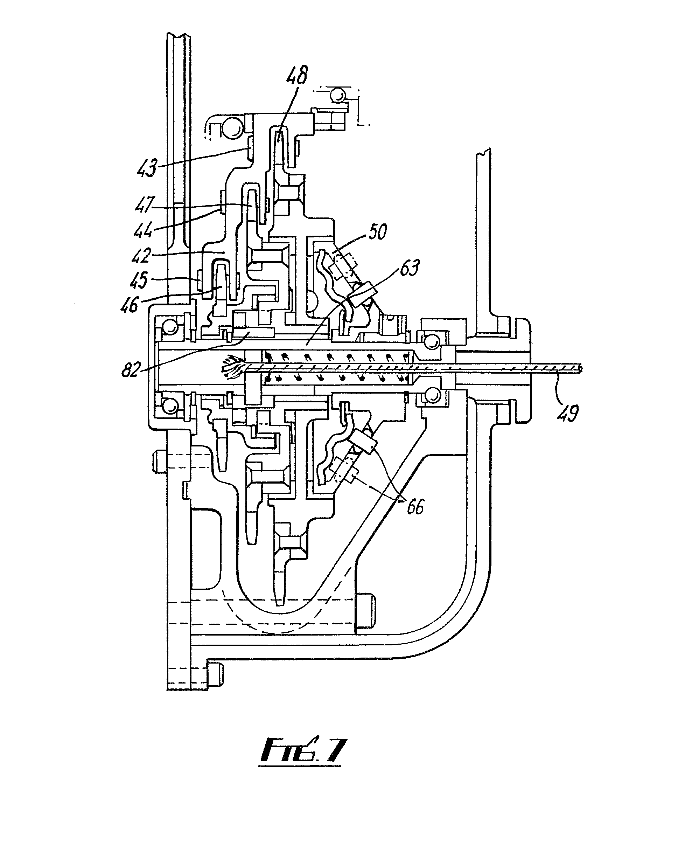

Referring now to Figs 5 to 7 there is shown the rear freewheel and gearing arrangement which provides for one of three gearing ratios to be selected. The input to the rear mechanism is through sprocket 12 or 35 as described above in relation to Figs 1 and 3 respectively.

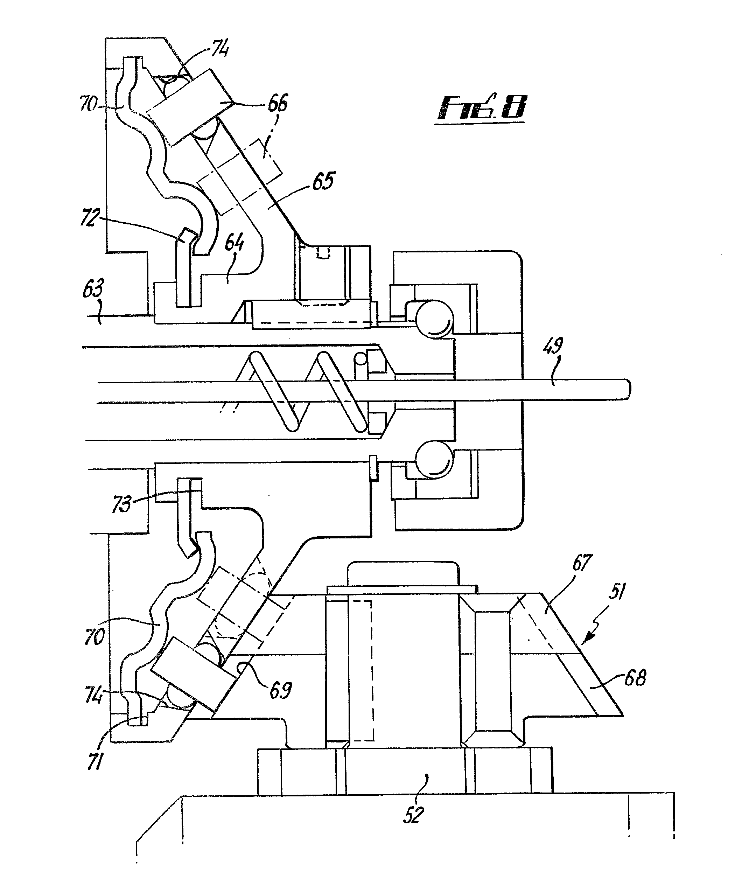

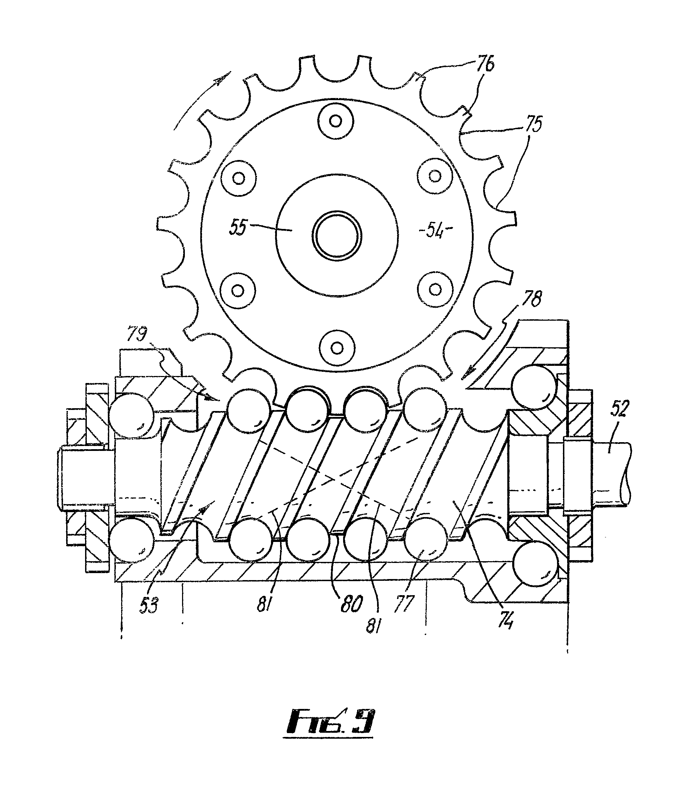

Sprocket 12 or 35 is secured to a sleeve-like shaft 41 and onto the other end of shaft 41 is splined a sprocket 42 having three sets of rollers 43,44,45 disposed equi-spaced around three respective pitch circles of differing diameters (see Fig. 6). One set of rollers meshes with the teeth of a respective sprocket of three sprockets 46,47,48 (see Fig. 7). The sprockets 46 to 48 are movable axially by means of a spring loaded toggle chain 49 so as to determine which of sprockets 46,47 and 49 is engaged by the respective set of rollers 43,44, 45. In this way the overall gearing ratio of the mechanism can be varied and a chain drive is dispensed with between sprocket 42 and sprockets 46 to 48. The sprockets 46, 47 and 48 are splined onto shaft 63, so as to allow for the aforementioned axial movement, on which there is also mounted a bevel wheel 51.

Bevel wheel 50 drives a pinion 51, and the preferred form of the bevel wheel 50 and pinion 51 will be described hereinafter. Pinion 51 is secured to a shaft 52 which is integral with a worm 53. (see Fig. 5) and a wheel 54 is in turn driven by worm 53. The preferred form of worm 53 and wheel 54 will be described hereinafter. Wheel 54 is secured to an output shaft 55 which is coaxially with sleeve-like shaft 41, the latter being rotatably mounted on shaft 55 with intermediate bearings 56.
In turn shaft 55 is also sleeve like and is rotatably mounted
on wheel spindle 57 by means of intermediate bearings 58.
The wheel hub 59 is rotatably mounted on spindle 57 by means
of roller bearings 60 to accommodate the heavy transmission
loading.

Shaft 55 has formed at the end remote from wheel 54 fingers
61 which engage a freewheel 62 mounted on hub 59 so as to
provide a forward drive to hub 59.

Although a bevel wheel and pinion of known form may be
used in the apparatus of this invention a bevel wheel and
split pinion as shown in Fig 8 is preferred.  Bevel wheel 50
comprises a hub 64 which is mounted on shaft 63 to rotate
therewith and a conical flange 65 secured to hub 64.
Located in outwardly tapered apertures 74 in flange 65
are two sets of rollers 66 disposed at inner and outer pitch
circles, the rollers 66 in each ring being equi-angularly
spaced and there being an angular stagger and an overlap
between the rollers of one ring and the rollers of the other
ring.  The rollers 66 of the inner ring engage one part 67 of
split pinion 51 whilst the rollers 66 of the outer ring engage
the other part 68 of split pinion 51.  Due to the angular
stagger and overlaps between the rollers 66 of one ring with
those of the other ring at least one  roller 66 is in
engagement with the pinion 51 at all times, thus ensuring a
smooth continuity of drive and no lip.  The two parts 67 and
68 of pinion 51 have grooves 69 in their outer surfaces to
receive rollers 66.  The rollers 66 are biassed into contact
with pinion 51 by means of a spring washer 70 which is
located by its outer periphery in a circumferential groove
71 in flange 65.  The free edge of washer 70 is biassed
towards the flange 65 by means of a second spring washer 72
located in an annular groove 73 in hub 64.  The pressure exerted by washers 70 on the rollers 66 is sufficient to induce sufficient friction as to ensure drive between the bevel wheel 50 and pinion 51 but at the same time to allow a limited amount of rotational motion of rollers 66 in order to reduce the friction of the drive arrangement.  In this way the frictional torque is reduced and the efficency of the drive improved.

In addition, although a worm and wheel of conventional form may be used in the apparatus of the invention, it is preferred that a recirculating ball worm and wheel drive as shown in Fig. 9 is used.  The worm 53 has a substantially semicircular cross-sectional helical groove 74 formed in its outer surface and the wheel 54 has substantially semicircular grooves 75 between the teeth 76, groove 74 and grooves 75 accommodating the balls 77 therein each of which is recirculated along guides 81 to the input end 78 after being driven out of contact with the wheel 54 at the output end 79 by the subsequent ball 77 being driven along the path of travel between the worm 53 and the wheel 54.  The worm 53 as shown in  Fig. 9 is stepped in that the outer diameter of the worm is reduced in the central region 80 by comparison with its axially outer regions so that the worm 53 and wheel 54 may engage throughout a greater angular travel of wheel 54 than would be the case with a worm of constant outer diameter. As an alternative the worm 53 could be formed having a venturi profile, ie be of reducing diameter towards the centre thereof, so as to envelop the wheel throughout a greater extent of its periphery.  The use of recirculating balls 77 between the worm 53 and wheel 54 reduces the friction in the drive transmission and the torque required to transmit the loading, and increases the efficiency of the worm and wheel transmission.  These effects are of particular importance in a man-powered machine.  The use of an enveloping  worm is particularly suited to the transmission of very heavy loadings such as occur in the context

(EP13059M)
(22.7.81)

— 8 —

of lifting apparatus, and also ensures a greater working life.

The primary application of the invention is in the context of cycle propulsion, but other man-powered applications are envisaged in the field of vehicle propulsion and load lifting devices, winches and the like.

Claims:

1.      A drive transmission arrangement comprising a manually
actuable input member (11), a drive element (12,35) coupled
to the member (59) to be driven and a step-up gearing arrangement (14,15) remote from and independent of said drive element
(12,35).

2.      A drive transmission arrangement according to claim 1
wherein said step-up gearing arrangement (14,15) is a multiple
stage arrangement.

3.      A drive transmission arrangement according to claim 2
wherein a spindle (29) of the input member (11) is arranged
coaxially with a spindle (28) of the step-up gearing arrangement
(14,15) and extends therethrough  for rotational support thereby.

4.      A drive transmission arrangement according to claim 3
wherein said step-up gearing arrangement (14,15) comprises
two sets of sprockets (14,15) arranged on spaced parallel shafts
(25,28).

5.      A drive transmission arrangement according to claim 4
wherein one sprocket (18,19) of each set of sprockets (14,15)
is coupled by means of a chain (20).

6.      A drive transmission arrangement according to claim 4
wherein said input member comprises a sprocket (11) coupled
by means of a chain (17) to a sprocket (16) of a first one (14)
of said sets of sprockets of said step-up gearing arrangement
(14,15).

7.      A drive transmission arrangement according to claim 6
wherein said drive element (12,35) comprises a sprocket (12),
coupled by means of a chain (22) to a sprocket (21) of a
second one (15) of said sets of sprockets of said step-up gearing arrangement (14,15).

8.      A drive transmission arrangement according to any one of claims 1 to 7 wherein said drive element (12,35) comprises a change gearing mechanism.

9.      A drive transmission arrangement according to claim 8 wherein said change gearing mechanism comprises two sets of sprockets, (42,46,47,48), each set comprising a like plurality of coaxial, like axially spaced sprockets, one set of sprockets (46,47,48) being axially displaceable whereby one of one set of sprockets engages one of the other set of sprockets for each axial location of said displaceable set of sprockets (46,47,48).

10.      A drive transmission arrangement according to claim 9 wherein each sprocket (43,44,45) of one set of sprockets (42) comprises a plurality rollers disposed around its periphery and adapted to engage between the teeth of a respective sprocket of the other set of sprockets (46,47,48).

11.      A drive transmission arrangement according to any one of claims 1 to 10 wherein said drive element (12,35) comprises a bevel wheel (50) and pinion (51) arrangement.

12.      A drive transmission arrangement according to claim 11 wherein said bevel wheel (50) comprises at least one set of rollers (66) mounted for rotation within and equi-angularly disposed around a conical flange (65) of said bevel wheel (50).

13.      A drive transmission arrangement according to claim 12 wherein said pinion (51) has grooves (69) in its peripheral surface adapted to receive said rollers (66).

14.      A drive transmission arrangement according to claim 12 or claim 13 comprising two sets of rollers (66) one arranged on each of two differing pitch circles, the rollers (66) of one set being angularly  staggered from those of the other set and
there being an angular overlap between the rollers (66) of the
two sets of rollers.

15.    A drive transmission arrangement according to claim 14
wherein said pinion (51) comprises two coaxial, axially
adjacent parts (67,68), each part engaging the rollers (66)
of one set of rollers of the bevel wheel (50).

16.    A drive transmission arrangement according to any one
of claims 12 to 15 wherein said rollers (66) are biassed by
spring means (70,72) into contact with said pinion (51).

17.    A drive transmission arrangement according to any one of
claims 1 to 16 wherein said drive element (12,35) comprises a
worm (53) and wheel (54) arrangement.

18.    A drive transmission arrangement according to claim 17
wherein said worm (53) and wheel (54) arrangement comprises
a plurality of balls (77) which pass in succession between
said worm (53) and said wheel (54) to transmit the drive
therebetween.

19.    A drive transmission arrangement according to claim 18
wherein said worm (53) comprises a helical groove (74) of
substantially semicircular cross-section and said wheel (54)
comprises teeth (76) having substantially semicircular grooves
(75) therebetween.

20.    A drive transmission arrangement according to claim 18
or claim 19 comprising guides (81) adapted to guide the balls
(77) from an output end (79) to an input end (78) of the path
of travel between said worm (53) and wheel (54).

21.    A drive transmission arrangement according to any one of
claims 17 to 20 wherein said worm (53) is of smaller diameter

(EP13059M)
(22.7.81)

- 12 -

at a central region (80) thereof than at its axially outer regions thereof.

22.    A drive transmission arrangement according to claim 21 wherein said worm (53) is stepped.

23.    A drive transmission arrangement according to claim 21 wherein the diameter of said worm (53) decreases progressively towards an axially central plane (80) thereof.

24.    A drive transmission arrangement comprising a manually actuable input member (11), a drive element (12,35) coupled to the member (59) to be driven, and disposed therebetween and coupled thereto a bevel wheel (50) and pinion (51) arrangement, wherein said bevel wheel (50) comprises at least one set of rollers (66) mounted for rotation in and equi-angularly spaced around said bevel wheel (50).

25.    A drive transmission arrangement comprising a manually actuable  input member (11), a drive element (12,35) coupled to the member (59) to be driven, and disposed therebetween and coupled thereto a worm (53) and wheel (54) arrangement, wherein said worm (53) and wheel (54) arrangement comprises a plurality of balls (77) which pass in succession between the worm (53) and the wheel (54) to transmit the drive therebetween.

0045190

Fig.1

Fig.3

Fig.4

Fɪɢ.2

0045190

FIG.5

12. 35

50

54

51

53

52

A

B

3/7

0045190

FIG. 6

FIG. 7

FIG. 8

76

75

55 -54-

78

79

52

53 81 80 77 74

81

FIG. 9